# EUROPEAN PATENT SPECIFICATION

(11) **EP 0 784 391 B1**
(45) Date of publication and mention of the grant of the patent: **02.08.2006**
(21) Application number: 97300105.0
(22) Date of filing: 09.01.1997
(51) Int. Cl.: H04J 14/02, H04B 10/08

(54) **Wavelength division multiplexing light transmitting system**
Optisches Wellenlängenmultiplex-Übertragungssystem
Système de transmission optique à multiplexage de longueurs d'ondes

(30) Priority: 10.01.1996 JP 206696
(43) Date of publication of application: 16.07.1997
(73) Proprietor: NEC CORPORATION, Tokyo (JP)
(72) Inventor: Koga, Tadashi, Minato-ku, Tokyo (JP); Aoki, Yasuhiro, Minato-ku, Tokyo (JP)
(74) Representative: W.P. Thompson & Co.

(56) References cited:
- EP-A- 0 531 047
- GB-A- 2 253 533
- US-A- 5 296 957
- PATENT ABSTRACTS OF JAPAN vol. 018, no. 230 (E-1542), 26 April 1994 (1994-04-26) & JP 06 021897 A (NIPPON TELEGR & TELEPH CORP), 28 January 1994 (1994-01-28)
- PATENT ABSTRACTS OF JAPAN vol. 1995, no. 10, 30 November 1995 (1995-11-30) & JP 07 183871 A (NEC CORP), 21 July 1995 (1995-07-21)

## Description

The present invention relates to a system and a method of monitoring a condition of an optical fibre transmission line in a wavelength division multiplexing light transmitting system for multiplexing and transmitting signal light having different wavelengths.

In a light transmitting system, a signal light may be attenuated or cut off, in an optical fibre transmission line and in a light amplifying repeater for various reasons. It is, therefore, necessary to monitor a condition of the light transmission line in order to operate the system in an effective manner.

Japanese Laid-Open Patent Application No. 5-344067 describes the following light transmission line monitoring method.

In an up optical fibre transmission line (to be referred to as an, "up line" hereinafter), a signal light having a wavelength of λ1 is output from a transmitter for the up line and transmitted to a receiver for the up line. In a receiver for the up line, the signal light is amplified by a light amplifier, and received by a light receiving section through a band pass optical filter.

Here, a monitor signal on the optical fibre transmission line is superimposed on the signal light by modulation in the transmitter for the up line. The signal light with the monitor signal is introduced into a down optical fibre transmission line (to be referred to as "down line" hereinafter) through a light returning circuit including a light attenuator, and is transmitted to a receiver for the down line.

The monitor signals arrive at different times at the receiver for the down line for each returning circuit. Thus, they can be separated by delaying the modulated signal and evaluating a correlation with the monitor signals arriving at the receiver. Accordingly, it is possible to convert a detected monitor signal and to evaluate a correlation with a predetermined standard signal to thereby monitor a loss on the light transmission line between respective repeater intervals.

A wavelength division multiplexing light transmission method is similarly carried out. In this case, the monitor signal is superimposed on at least one multiplexed signal light by modulation.

In the light transmitting system, the monitor signal is superimposed on the signal light by modulation. Thus, when carrying out the monitoring operation at a time when the system is in service, the modulating ratio must be reduced to a low level in order to prevent deterioration of the main signal. On the other hand, a signal-noise-ratio (SNR) of the monitor signal is proportional to a square of the modulation ratio. In a case of a low modulation ratio, this results in a problem, because the SNR of the monitor signal is not sufficient.

When the signal light on which the monitor signal is superimposed by modulation is introduced into the other light transmission line through the light returning circuit, the signal light is sufficiently attenuated in order to prevent the deterioration of the signal light on the light transmission line. In this case, a long time is needed to perform a correlation detection in the receiver in order to detect the attenuated monitor signal. This results in a problem that a trouble point on the light transmission line cannot be promptly specified.

Furthermore, the receiver for the down line, which receives the signal light on which the monitor signal is superimposed, simultaneously receives the signal light transmitted from a transmitter for the down line. Thus, if both transmitters for the up line and for the down line transmit the monitor signals at the same time, both receivers for the up line and for the down line receive the signal lights on which the monitor signals transmitted from the respective transmitters are superimposed. Therefore, monitoring the optical fibre transmission line becomes impossible. For this reason, in the conventional light transmission line monitoring method, both the transmitting and receiving stations having a transmitter and a receiver must alternatively carry out the monitoring operation, respectively. Since it takes a long time to detect the monitor signal, for example, there may be a possibility that each station may only carry out only one monitoring operation per day.

Features of a light transmission line monitoring method and a wavelength multiplexing light transmitting system therefor, to be described below by way of example in illustration of the invention, are that they minimise the above mentioned problems, largely improve the SNR of the monitor signal, and sufficiently shorten the detection time of the monitor signal, whereby two stations can individually and simultaneously monitor the light transmitting line.

GB 2253533 discloses a method of testing an optical transmission link which includes the steps of transmitting a first optical communications signal from one end of the link along an optical fibre to the other end of the link, returning a predetermined part of said first optical signal using wavelength independent means to said one end of the link and to a first receiver thereat and monitoring the returned signal received at the first receiver.

JP 6021897 discloses a system for controlling an optical output level at an optical amplifier repeater in a communications line without hindrance by superimposing a control signal of a different frequency on an optical transmission signal of all wavelengths to be multiplexed.

JP 7183871 discloses a system for performing monitoring control in the two-wave narrow band wavelength multiplexed transmission of an optical signal.

EP 0531047 discloses an apparatus for detecting the presence and location of faults in an optical transmission system and which is particularly applicable to underwater optical transmission systems.

US5296957 discloses an optical repeater having a loop-back function in a transmission system including first and second transmission lines. The optical repeater includes a first optical amplifier connected to the first transmission line, a second optical amplifier connected to the second transmission line, a loop-back unit connected to both transmission lines, and a control unit. The control unit controls the loop-back unit to form a loop-back line when a loop-back instruction is detected. Therefore, optical signals are directly amplified without being converted into electrical signals, and a loop-back signal (return signal) and optical signals are not mixed in the optical repeater.

According to an aspect of the present invention, there is provided a wavelength division multiplexing light transmitting system including a local station having a transmitter and a receiver, a remote station having a transmitter and a receiver an up optical fibre transmission line connecting the local station and the remote station, a down optical fibre transmission line connecting the local station and the remote station, at least one light returning circuit which returns at least a portion of the light from the up optical fibre transmission line to the down optical fibre transmission line, and at least one light returning circuit which returns at least a portion of the light from the down optical fibre transmission line to the up optical fibre transmission line, the local station and the remote station each including a monitor light multiplexer and a monitor light demultiplexer, the multiplexer and the demultiplexer multiplexing and demultiplexing, respectively, monitor light with at least one signal light; and characterised in that a wavelength of said monitor light is different to a wavelength of said at least one signal light and wherein said wavelength of said monitor light is returned, with one or more transmitted wavelengths of said at least one signal light, from the receiver and at least one repeater to the transmitter and subsequently demultiplexed to produce a monitor signal at said transmitter.

According to another aspect of the present invention, there is provided a method of monitoring a light transmission line having an up optical fibre transmission line and a down optical fibre transmission line connecting a local and a remote station, including the steps of multiplexing a monitor light with at least one signal light at each of the local and the remote stations, transmitting the light multiplexed at the local station from the local station to the remote station on the up optical fibre transmission line and transmitting the light multiplexed at the remote station from the remote station to the local station on the down optical fibre transmission line, attenuating the light from one of the up and down optical fibre transmission lines and introducing attenuated light into the other of the up and down optical fibre transmission lines, receiving the attenuated light, and selecting the monitor light at each of the local and remote stations; and characterised in that a wavelength of said monitor light is different to a wavelength of said at least one signal light and wherein said wavelength of said monitor light is returned, with one or more transmitted wavelengths of said at least one signal light, from the receiver and at least one repeater to the transmitter and subsequently demultiplexed to produce a monitor signal at said transmitter.

According to another aspect of the present invention there is provided a method of monitoring a light transmission line having an up optical fibre transmission line and a down optical fibre transmission line connecting a local and a remote station, including the steps of multiplexing a monitor light with at least one signal light at each of the local and the remote stations, transmitting the light multiplexed at the local station from the local station to the remote station on the up optical fibre transmission line and transmitting the light multiplexed at the remote station from the remote station to the local station on the down optical fibre transmission line, attenuating the light from one of the up and down optical fibre transmission lines and introducing attenuated light into the other of the up and down optical fibre transmission lines, receiving the attenuated light, and selecting the monitor light at each of the local and remote stations; and
characterised in that a wavelength of said monitor light is different to a wavelength of said at least one signal light and wherein said wavelength of said monitor light is returned, with one or more transmitted wavelengths of said at least one signal light, from the receiver and at least one repeater to the transmitter and subsequently demultiplexed to produce a monitor signal at said transmitter.

Thereby, the monitoring of the transmission line can be carried out promptly and its SNR can be improved.

The following description and drawings disclose a previously proposed system and, by way of example, a system and method illustrative of the present invention which is characterised in the appended claims, whose terms determine the extent of the protection conferred hereby.

In the drawings:-
Fig. 1 is a block schematic diagram showing a previously proposed light transmitting system, and
Fig. 2 is a block schematic diagram showing an embodiment of a wavelength division multiplexing light transmitting system illustrative of the present invention.

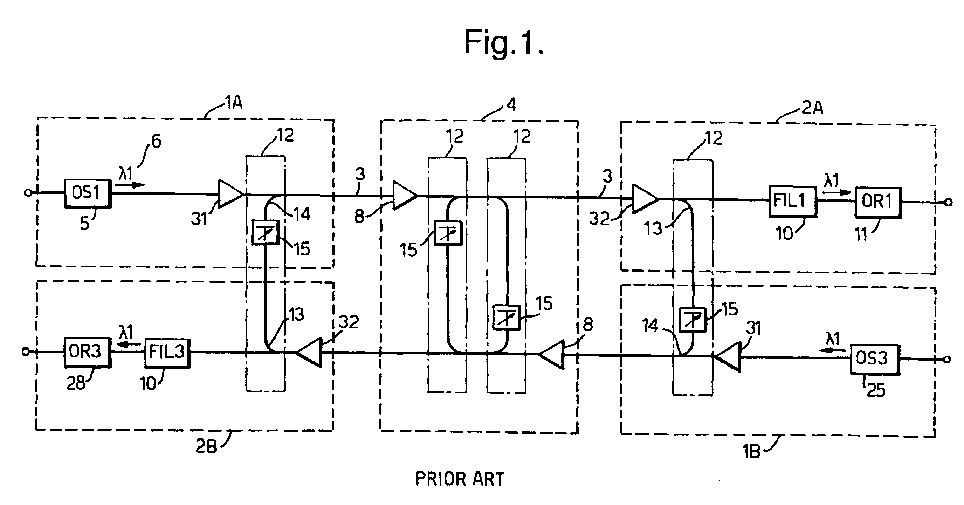

To understand better the present invention, a brief reference will be made to a previously proposed light transmitting system, shown in Fig. 1. In an up optical fibre transmission line, a signal light 6 having a wavelength of λ1 output from a signal light source 5 is amplified by a light amplifier 31 in a transmitter for the up line 1A, and transmitted to a receiver for the up line 2A through an optical fibre transmission line 3 and a light amplifying repeater 4. In the receiver for the up line 2A, the signal light 6 is amplified by a light amplifier 32, and is received by a light receiving section 11 through a band pass optical filter 10.

A monitor signal on the optical fibre transmission line is superimposed on the signal light 6 by modulation in the signal light source 5 in the transmitter for the up line 1A. The monitor signal is introduced into a down optical fibre transmission line through a light returning circuit 12 comprising light couplers 13, 14 and a light attenuator 15, and transmitted to a light receiving section 28 in a receiver for the down line 2B. The monitor signal arrives at a different time at the receiver for the down line 2B on the down light transmission line for each returning circuit 12. Thus, it can be separated by delaying the modulation signal and by evaluating a correlation with the monitor signal arriving at the receiver for the down line 2b. Accordingly, it is possible to convert a detected monitor signal and to evaluate a correlation with a predetermined standard signal to thereby monitor a loss on the light transmission line between respective repeater intervals.

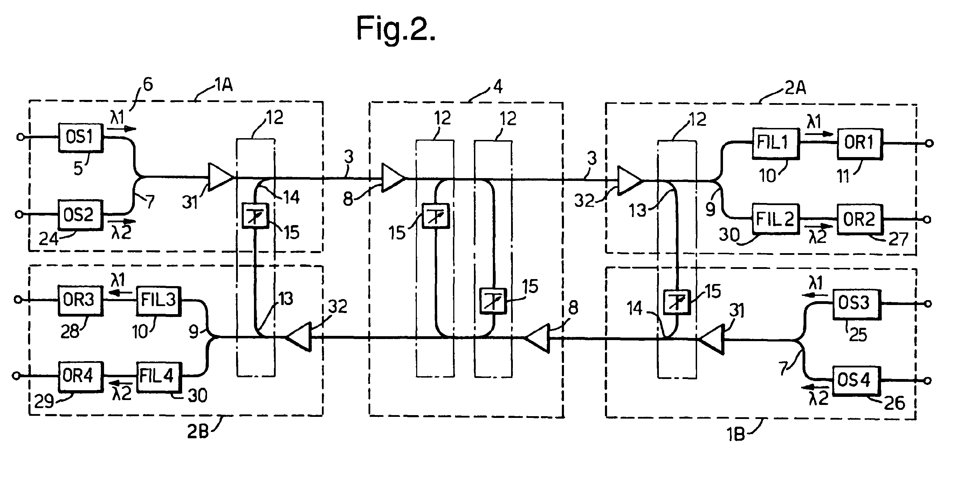

Referring to Fig. 2, a wavelength division multiplexing light transmitting system and a light transmission line monitoring method illustrative of the present invention are shown.

In Fig. 2, elements which are similar to corresponding elements shown in Fig. 1 will be designated with like reference numerals.

Fig. 2 shows an example in which lights having two wavelengths that are different from each other are amplified and transmitted by one unit of a light amplifying repeater.

In an up light transmitting system, signal light sources 5 and 24 in a transmitter for the up line 1A output light signals having wavelengths of λ1 and λ2 that are different in wavelength from each other. These light signals are multiplexed by a coupler 7, amplified by a light amplifier 31 and input through a light returning circuit 12 to an up optical fibre transmission line 3. This light returning circuit 12 is disposed in the transmitter for the up line 1A and in the receiver for the down line 2B in one transmitting and receiving station. The transmitter for the up line 1A and the receiver for the down line 2B collectively form a transmitting and receiving station. The light returning circuit 12 has a light coupler 13, a light attenuator 15 and a light coupler 14, and attenuates a light signal on the down optical fibre transmitting line to thereby introduce it into the up optical fibre transmission line.

A light amplifying repeater 4 includes two light returning circuits 12 in addition to a light amplifier 8. The light returning circuits 12 attenuates the respective light signals and introduces them into the other optical fibre transmission line. When the light signals arrive at the receiver for the up line 2A, they are amplified by a light amplifier 32, passed through the light returning circuit 12, branched by a coupler 9, and received by the receiving sections 11 and 27 through band pass light filters 10 and 30.

The light receiving sections 11 and 27 receive the light signals having the wavelengths of λ1 and λ2 which are transmitted from a transmitter for a down line 1B and introduced through the light returning circuit 12 into the up line, in addition to the light signals having the wavelengths of λ1 and λ2 transmitted from the transmitter from the up line 1A. This is similarly carried out in light receiving sections 28 and 29 in the receiver for the down line 2B.

The light having the wavelength of λ2 is defined as a monitor light. The light signal having the wavelength of λ1 and the monitor light having the wavelength of λ2 that are multiplexed in the transmitter for the up line 1A are attenuated by the two units of the light returning circuits 12, and introduced into the down line. These light signals arrive at the receiver for the down line 2B, and are amplified by the light amplifier 32, and branched by the coupler 9. Then, the light having the wavelength of λ2 is passed through the band pass light filter 30 and received by the light receiving section 29. After the light having the wavelength of X2 is received, it is converted into an electric signal, and the strength thereof is measured by correlation processing and the condition (gain) of the light transmission line is ' determined. The monitor light signals having the wavelength of X2 are returned from the light returning circuits 12 located at the light amplifying repeater 4 and the other transmitting and receiving station, respectively. The receiver for the line 2A and the transmitter for the down line 1B collectively form the other transmitting and receiving station. However, since there is a difference between the time of transmission and the time of receipt, it is possible to adjust this difference between the delayed times to thereby separate and simultaneously detect the two monitor light signals.

The receiver for the down line 2B receives light signals having the wavelengths of λ1 and λ2 transmitted from the transmitter for the down line 1B, in addition to the light signals returned from the light returning circuits 12. For this reason, when detecting the very small monitor light having the wavelength of λ2, the strong or stronger light having the wavelength of λ2 transmitted from the transmitter for the down line 1B is removed as noise by correlation processing. The monitor light (λ2) transmitted from the transmitter for the up line 1A can have a modulation frequency different from that of the monitor light (λ1) transmitted from the transmitter for the down line 1B.

It is possible to have more than two light returning circuits 12. For example, in a case in which the light returning circuits are arranged at every 200 to 300 units of the light amplifying repeater, it is possible to reduce the deterioration of the signal greatly. Thus, it is desirable that the light attenuated by the light returning circuit 12 is attenuated to a value which is equal to or less than approximately 40 dB, for the light signals having the wavelengths of λ1 and λ2 transmitted from the transmitter for the down line 1B.

The local station and the remote station can use, as the monitor light signals, wavelengths that are different from each other, and different from the wavelengths used in the wavelength multiplexing operation, respectively. In this case, both the stations are able to monitor the condition on the optical fibre transmission line at the same time. The wavelength used in the wavelength multiplexing operation can also include more than three wavelengths.

The location at which the light returning circuit 12 is arranged is not limited to within the light amplifying repeater and to within the transmitting and receiving stations at both ends in the light transmitting line. However, it is desirable to dispose the light returning circuits at the above mentioned places in view of the need to make easier apparatus maintenance and like considerations.

In the above mentioned configuration, one wavelength only is assigned to the monitor signal. As a result, it is possible to transmit the monitor signal under a modulation ratio of 100% and obtain a sufficient SNR. Further, it is possible to largely shorten the time required to demodulate the monitor signal.

In the configuration shown in Fig. 2, the light signals having the two wavelengths of, for example, λ1 (1556 nm) and λ2 (1559 nm) respectively are output from the signal light sources 5, 24 which includes an InGaAs/InP distribution feedback type semiconductor laser having a wavelength of 1.55 microns and a LiNb03 light modulator for externally modulating an output from the laser in the transmitter for the up line 1A. The light amplifiers 31, 32 can use an 1.48 micron InGaAs/In Fabry-Perot type semiconductor laser excitation erbium added optical fibre amplifier. Also, the light amplifier 8 has a configuration similar to that of the above-mentioned light amplifiers. However, a repeater gain thereof is set to 16.8 dB at a gain peak wavelength. The coupler 13, 14 and the attenuator 15 constituting the light returning circuit 12 are composed of a single mode type optical fibre coupler. The other light returning circuits 12 have a similar configuration. The optical fibre transmission line 3 can use a dispersion shift type optical fibre having a mode field diameter of 8 microns (1558 nm), a wavelength dispersion value of 1 ps/nm/km (1558 nm), a loss of 0.21 dB/km and a length of 80 km. The receiver for the up line 2A can be provided with band pass light filters 10, 30 having transmission centre wavelengths of λ1 (1556 nm) and λ2 (1559 nm) and light receiving sections 11, 27 having an InGaAs-PIN photo diode. The down light transmitting system has a configuration similar to the above-mentioned configuration.

In order to compare the arrangement described above illustrative of the present invention with the previously proposed method, the above mentioned respective components were used, with both the attenuation values of the returned light signals set at approximately 45 dB. With the light transmitting apparatus of Fig. 1, the monitor signal was transmitted at a modulation ratio of approximately 5% when the system was in service. In this case, it took approximately four hours to integrate and demodulate the monitor signal. On the other hand, in the above mentioned configuration described with reference to Fig. 2, it took approximately 30 seconds to obtain the same SNR. If the modulation time is made longer using the configuration described with reference to Fig. 2, it is possible to obtain a further improvement in the SNR.

The scope of protection sought is not limited to the configuration of the above mentioned Fig. 2 embodiment. The optical fibre amplifier may be of another kind. The semi-conductor laser may be made of another material, such as GaAlAs/GaAs or the like, and also the other constituent elements described above are not limited to those of the embodiment.

As mentioned above, in the light transmission line monitoring method and the wavelength division multiplexing light transmitting system described with reference to Fig. 2, one special wavelength among a plurality of light signals to be multiplexed is used as the monitor signal. This is introduced, by multiplexing the monitor signal with the signal light, into the other optical fibre transmission line, and returned to the receiver and detected. As a result, it is possible to improve the SNR of the monitor signal, and it is also possible to make the detection time of the monitor signal extremely short.

While a particular embodiment has been described, by way of example in illustration of the present invention, , it is to be understood that variations and modifications thereof, as well as other embodiments may be conceived and made that fall within the scope of the protection sought by the appended claims.

## Claims

1. A wavelength division multiplexing light transmitting system including a local station having a transmitter (1A) and a receiver (2B), a remote station having a transmitter (1B) and a receiver (2A) an up optical fibre transmission line (3) connecting the local station and the remote station, a down optical fibre transmission line connecting the local station and the remote station, at least one light returning circuit (12) which returns at least a portion of the light from the up optical fibre transmission line to the down optical fibre transmission line, and at least one light returning circuit (12) which returns at least a portion of the light from the down optical fibre transmission line to the up optical fibre transmi.ssion line, the local station and the remote station each including a monitor light multiplexer and a monitor light demultiplexer, the multiplexer and the demultiplexer multiplexing and demultiplexing, respectively, monitor light with at least one signal light; and **characterised in that** a wavelength (λ2) of said monitor light is different to a wavelength (λ1) of said at least one signal light and wherein said wavelength (λ2) of said monitor light is returned, with one or more transmitted wavelengths of said at least one signal light, from the receiver and at least one repeater to the transmitter and subsequently demultiplexed to produce a monitor signal at said transmitter.

2. A wavelength division multiplexing light transmitting system as claimed in claim 1, wherein the multiplexer includes a coupler (7) and the demultiplexer includes a coupler (9) and at least one filter (FIL1, FIL2, FIL3, FIL4).

3. A wavelength division multiplexing light transmitting system as claimed in claim 1, including at least one light amplifying repeater (4) disposed on the up and the down optical fibre transmission lines.

4. A wavelength division multiplexing light transmitting system as claimed in claim 1, wherein a plurality of light returning circuits (12) is disposed in each of the up and down optical fibre transmission lines, at least one of the plurality of light returning circuits returning light from the up optical fibre transmission line to the down optical fibre transmission line and at least one of the plurality of light returning circuits returning light from the down optical fibre transmission line to the up optical fibre transmission line.

5. A wavelength division multiplexing light transmitting system as claimed in claim 3, wherein the at least one light returning circuit (12) is located within at least one of the light amplifying repeaters (4) and of the local and remote stations.

6. A wavelength division multiplexing light transmitting system as claimed in claim 1, wherein the monitor light transmitted from the local station has a wavelength which is different from a wavelength of the monitor light transmitted from the remote station.

7. A wavelength division multiplexing light transmitting system as claimed in claim 1, wherein the monitor light transmitted from one of the local and of the remote stations is different in modulation frequency from the monitor light having the same wavelength transmitted from the other of the local and of the remote stations.

8. A wavelength division multiplexing light transmitting system as claimed in claim 3, wherein the at least one light amplifying repeater (4) includes two light returning circuits (12) connected between the up and the down optical fibre transmission lines.

9. A method of monitoring a light transmission line having an up optical fibre transmission line and a down optical fibre transmission line (3) connecting a local and a remote station, including the steps of multiplexing a monitor light with at least one signal light at each of the local and the remote stations, transmitting the light multiplexed at the local station from the local station to the remote station on the up optical fibre transmission line and transmitting the light multiplexed at the remote station from the remote station to the local station on the down optical fibre transmission line, attenuating the light from one of the up and down optical fibre transmission lines and introducing attenuated light into the other of the up and down optical fibre transmission lines, receiving the attenuated light, and selecting the monitor light at each of the local and remote stations; and **characterised in that** a wavelength (X2) of said monitor light is different to a wavelength (λ1) of said at least one signal light and wherein said wavelength (X2) of said monitor light is returned, with one or more transmitted wavelengths of said at least one signal light, from the receiver and at least one repeater to the transmitter and subsequently demultiplexed to produce a monitor signal at said transmitter.

10. A light transmission line monitoring method as claimed in claim 9, wherein at the attenuating step, the multiplexed light is attenuated at a plurality of locations in the up optical fibre transmission line and introduced at a corresponding plurality of locations in the down optical fibre transmission line, the multiplexed light also being attenuated at a plurality of locations in the down optical fibre transmission line and introduced at a corresponding plurality of locations in the up optical fibre transmission line.

11. A light transmission line monitoring method as claimed in claim 9, wherein the monitor light transmitted from one of the local and remote stations has a wavelength which is different from a wavelength of the monitor light transmitted from the other of the local and remote stations.

12. A light transmission line monitoring method as claimed in claim 9, wherein the monitor light transmitted from one of the local and remote stations is different in modulation frequency from the monitor light having the same wavelength transmitted from the other of the local and remote stations.

## Patentansprüche

1. Optisches. Wellenlängenmultiplex-Ubertragungssystem mit:
einer lokalen Station mit einem Sender (1A) und einem Empfänger (2B);
einer abgesetzten Station mit einem Sender (1B) und einem Empfänger (2A);
einer vorlaufenden faseroptischen Übertragungsleitung (3), die die lokale Station und die abgesetzte Station verbindet;
einer rücklaufenden faseroptischen Übertragungsleitung, die lokale Station und die abgesetzte Station verbindet;
mindestens einer Lichtrückkopplungsschaltung (12), die mindestens Teil Lichts von der vorlaufenden faseroptischen Übertragungsleitung zur rücklaufenden faseroptischen Übertragungsleitung zurückkoppelt; und
mindestens einer Lichtrückkopplungsschaltung (12), die mindestens einen Teil des Lichts von der rücklaufenden faseroptischen Übertragungsleitung zur vorlaufenden faseroptischen Übertragungsleitung zurückkoppelt;
wobei die lokale Station und die abgesetzte Station jeweils einen Überwachungslichtmultiplexer und einen Überwachungslichtdemultiplexer aufweisen, wobei der multiplexer und der Demultiplexer überwachungslicht mit mindestens einem Signallicht multiplexen bzw. äemultiplexen;
**dadurch gekennzeichnet, dass**
eine Wellenlänge (λ2) des Überwachungslichts sich von einer Wellenlänge (λ1) des mindestens einen Signallichts unterscheidet, wobei die Wellenlänge (λ2) des Überwachungslichts mit einer oder mehreren übertragenen Wellenlängen des mindestens einen Signallichts vom Empfänger und mindestens einem zum sender zurückgekoppelt und anschließend demultiplext wird, um am Sender Überwachungssignal zu erzeugen.

2. System nach Anspruch 1, wobei der Multiplexer einen Koppler (7) und der Demultiplexer einen Koppler (9) und mindestens ein Filter (FIL1, FIL2, FIL3, FIL4) aufweist.

3. System nach Anspruch 1 mit mindestens einem lichtverstärkenden Repeater (4), der auf der vorlaufenden und der rücklaufenden faseroptischen Übertragungsleitung angeordnet ist,

4. System nach Anspruch 1, wobei in der vorlauf-enden und in der rücklaufenden faseroptischen Ubortragung'sleit.ung jeweils mehrere Lichtrückkopplungsschaltungen (12) angeordnet sind, wobei mindestens eine der mehreren Lichtrückkopplungsschaltungen Licht von der vorlaufenden faseroptischen übertragungsleitung zur rücklaufenden faseroptischen Übertragungsleitung zurückkoppelt und mindestens eine der mehreren Lichtrückkopplungsschaltungen Licht von der rücklaufenden faseroptischen Übertragungsleitung zur vorlaufenden faseroptischen Übertragungsleitung zurückkoppelt.

5. System nach Anspruch 3, wobei die mindestens ei-ne Lichtrückkopplungsschaltung (12) in dem mindestens einen der lichtverstärkenden (4) oder in der lokalen und/oder der abgesetzter Station angeordnet ist.

6. System nach Anspruch 1, p wobei das von der lokalen Station übertragene Überwachungslicht eine Wellenlänge auf weist, die sich von einer Wellenlänge des von der abgesetzten Station übertragenen Überwachungs unterscheidet.

7. System nach Anspruch 1, wobei das von der lokalen oder der abgesetzten Station übertragene 1 eine andere Frequenzaiodulation hat als von der anderen Station übertragene Überwachungslicht mit der gleichen Wellenlänge.

8. System nach Anspruch 3, wobei der mindestens eine lichtverstärkende Repeater (4) zwei Lichtrückkopplungs- - schaltungen (12) aufweist, die zwischen der vorlaufenden und der rücklaufenden faseroptischen Übertragungsleitung geschaltet sind.

9. Verfahren zum Überwachen einer optischen Übertragungsleitung mit einer vorlaufenden faseroptischen Übertragungsleitung und einer rücklaufenden faseroptischen Übertragungsleitung (3), die eine lokale und eine abgesetzte Station verbinden, wobei das Verfahren die Schritte aufweist:
Multiplexen eines Überwachungslichts mit mindestens einem Signallicht an der lokalen and an der abge-Station;
Übertragen des an lokalen Station geeiultiplexten Lichts von der Station abgesetzten Station über die vorlaufende faseroptische Übertragungsleitung und Übertragen des an der abgesetzten Station gemultiplexten Lichts von der abgesetzten Station, zur lokalen Station über die rücklaufende faseroptische Übertragungsleitung;
Dämpfen des Lichts von der vorlaufenden oder der rücklaufenden faseroptischen Übertragungsleitung und Einkoppeln des gedämpften Lichts in die andere faseroptische Übertragungsleitung; und
Empfangen des gedämpften Lichts und Auswählen des Überwaehungslichts an der lokalen und an der abgesetz-Station;
**dadurch gekennzeichnet, dass**
eine Wellenlänge (3.2) des Überwachungslichts sich von Wellenlänge (Ä1) mindestens einen Signallichts unterscheidet, wobei die Wellenlänge (Ä2) des Überwachungslichts mit einer oder übertragenen Wellenlängen des mindestens Signallichts vom Empfänger und mindestens einem Repeater zum Sender zurückgekoppelt und anschließend demultiplext wird, um am Sender Überwachungssignal zu erzeugen.

10. Verfahren nach Anspruch 9, wobei im Dänpfurigsschritt das gemultiplexte Licht an Stellen ir, der vorlaufenden faseroptischen Übertragungsleitung gedämpft und an einer entsprechenden Vielzahl von Stellen in die rücklaufende faseroptische Übertragungsleitung eingekoppelt wird, und wobei das gemultiplexte Licht an mehreren Stellen in der rücklaufenden faseroptischen Übertragungsleitung gedämpft und an einer entsprechenden Vielzahl von Stellen in die vorlaufende fasr=roptische Übertragungsleitung wird.

11. verfahren nach Anspriäch 9, wobei das von der lokalen oder der abgesetzten Station Überwachungslicht eine Wellenlänge hat, die sich von Wellenlänge des von der anderen Station übertragenen Überwachungslichts unterscheidet.

12. Verfahren nach Anspruch 9, wobei das von der lokalen oder der abgesetzten Station übertragene Überwachungslicht eime Modulationsfrequenz hat als das von der zinderen Station übertragene Oberwaeimngslicht mit der gleichen Wellenlänge.

## Revendications

1. Système de transmission de lumière à multiplexage par répartition en longueur d'onde comprenant une station locale ayant un émetteur (1A) et un récepteur (2B), une station à distance ayant un émetteur (1B) et un récepteur (2A), une ligne de transmission à fibre optique montante (3) connectant la station locale et la station à distance, une ligne de transmission à fibre optique descendante connectant la station locale et la station à distance, au moins un circuit de retour de lumière (12) qui retourne au moins une partie de la lumière de la ligne de transmission à fibre optique montante à la ligne de transmission à fibre optique descendante, et au moins un circuit de retour de lumière (12) qui retourne au moins une partie de la lumière de la ligne de transmission à fibre optique descendante à la ligne de transmission à fibre optique montante, la station locale et la station à distance incluant chacune un multiplexeur de lumière de contrôle et un démultiplexeur de lumière de contrôle, le multiplexeur et le démultiplexeur multiplexant et démultiplexant, respectivement, une lumière de contrôle avec au moins une lumière de signal ; et **caractérisé en ce qu'**une longueur d'onde (λ2) de ladite lumière de contrôle est différente de la longueur d'onde (λ1) de ladite au moins une lumière de signal et dans lequel ladite longueur d'onde (λ2) de ladite lumière de contrôle est retournée, avec une ou plusieurs longueurs d'ondes transmises de ladite au moins une lumière de contrôle, du récepteur et d'au moins un répéteur à l'émetteur et par la suite démultiplexée pour produire un signal de contrôle au niveau dudit émetteur.

2. Système de transmission de lumière à multiplexage par répartition en longueur d'onde selon la revendication 1, dans lequel le multiplexeur inclut un coupleur (7) et le démultiplexeur inclut un coupleur (9) et au moins un filtre (FIL1, FIL2, FIL3, FIL4).

3. Système de transmission de lumière à multiplexage par répartition en longueur d'onde selon la revendication 1, incluant au moins un répéteur amplificateur de lumière (4) disposé sur les lignes de transmission à fibre optique montante et descendante.

4. Système de transmission de lumière à multiplexage par répartition en longueur d'onde selon la revendication 1, dans lequel une pluralité de circuits de retour de lumière (12) est disposée dans chacune des lignes de transmission à fibre optique montante et descendante, au moins un de la pluralité de circuits de retour de lumière retournant la lumière de la ligne de transmission à fibre optique montante à la ligne de transmission à fibre optique descendante et au moins un de la pluralité de circuits de retour de lumière retournant la lumière de la ligne de transmission à fibre optique descendante à la ligne de transmission à fibre optique montante.

5. Système de transmission de lumière à multiplexage par répartition en longueur d'onde selon la revendication 3, dans lequel le au moins un circuit de retour de lumière (12) est situé à l'intérieur d'au moins un des répéteurs amplificateurs de lumière (4) et des stations locale et à distance.

6. Système de transmission de lumière à multiplexage par répartition en longueur d'onde selon la revendication 1, dans lequel la lumière de contrôle transmise à partir de la station locale a une longueur d'onde qui est différente d'une longueur d'onde de la lumière de contrôle transmise à partir de la station à distance.

7. Système de transmission de lumière à multiplexage par répartition en longueur d'onde selon la revendication 1, dans lequel la lumière de contrôle transmise à partir de l'une des stations locale et à distance est différente en fréquence de modulation de la lumière de contrôle ayant la même longueur d'onde transmise à partir de l'autre des stations locale et à distance.

8. Système de transmission de lumière à multiplexage par répartition en longueur d'onde selon la revendication 3, dans lequel l'au moins un répéteur amplificateur de lumière (4) inclut deux circuits de retour de lumière (12) connectés entre les lignes de transmission à fibre optique montante et descendante.

9. Procédé de contrôle d'une ligne de transmission de lumière ayant une ligne de transmission à fibre optique montante et une ligne de transmission à fibre optique descendante (3) connectant une station locale et une station à distance, incluant les étapes consistant à multiplexer une lumière de contrôle avec au moins une lumière de signal au niveau de chacune des stations locale et à distance, transmettre la lumière multiplexée au niveau de la station locale, de la station locale à la station à di stance sur la ligne de transmission à fibre optique montante et transmettre la lumière multiplexée au niveau de la station à distance de la station à distance à la station locale sur la ligne de transmission à fibre optique descendante, atténuer la lumière provenant de l'une des lignes de transmission à fibre optique montante et descendante et introduire la lumière atténuée dans l'autre des lignes de transmission à fibre optique montante et descendante, recevoir la lumière atténuée et sélectionner la lumière de contrôle au niveau de chacune des stations locale et à distance ; et **caractérisé en ce qu'**une longueur d'onde (À2) de ladite lumière de contrôle est différente de la longueur d'onde (λ1) de ladite au moins une lumière de signal et dans lequel ladite longueur d'onde (λ2) de ladite lumière de contrôle est retournée, avec une ou plusieurs longueurs d'ondes transmises de ladite au moins une lumière de signal, du récepteur et d'au moins un répéteur à l'émetteur et par la suite démultiplexée pour produire un signal de contrôle au niveau dudit émetteur.

10. Procédé de contrôle d'une ligne de transmission de lumière selon la revendication 9, dans lequel, dans l'étape d'atténuation, la lumière multiplexée est atténuée au niveau d'une pluralité de positions dans la ligne de transmission à fibre optique montante et introduite au niveau d'une pluralité correspondante de positions dans la ligne de transmission à fibre optique descendante, la lumière multiplexée étant également atténuée au niveau d'une pluralité de positions dans la ligne de transmission à fibre optique descendante et introduite au niveau d'une pluralité correspondante de positions dans la ligne de transmission à fibre optique montante.

11. Procédé de contrôle d'une ligne de transmission de lumière selon la revendication 9, dans lequel la lumière de contrôle transmise à partir de l'une des stations locale et à distance a une longueur d'onde qui est différente d'une longueur d'onde de la lumière de contrôle transmise à partir de l'autre des stations locale à distance.

12. Procédé de contrôle d'une ligne de transmission de lumière selon la revendication 9, dans lequel la lumière de contrôle transmise à partir de l'une des stations locale et à distance est différente en fréquence de modulation de la lumière de contrôle ayant la même longueur d'onde transmise à partir de l'autre des stations locale et à distance.
